# EUROPEAN PATENT SPECIFICATION

(11) **EP 3 048 852 B1**
(45) Date of publication and mention of the grant of the patent: **04.04.2018**
(21) Application number: 16152576.1
(22) Date of filing: 25.01.2016
(51) Int. Cl.: H04W 74/08, H04W 24/02, H04W 52/04, H04W 72/04, H04W 74/00, H04W 88/02, H04W 88/08

(54) **METHOD AND APPARATUS FOR IMPROVING BEAM FINDING IN A WIRELESS COMMUNICATION SYSTEM**
VERFAHREN UND VORRICHTUNG ZUR VERBESSERUNG DER STRAHLFINDUNG IN EINEM DRAHTLOSKOMMUNIKATIONSSYSTEM
PROCÉDÉ ET APPAREIL POUR AMÉLIORER LE TEMPS DE DÉTECTION DE FAISCEAU DANS UN SYSTÈME DE COMMUNICATIONS SANS FIL

(30) Priority: 26.01.2015 US 201562107937 P; 26.01.2015 US 201562107945 P
(43) Date of publication of application: 27.07.2016
(73) Proprietor: ASUSTek Computer Inc., Taipei City 112 (TW)
(72) Inventor: LIN, Ko-Chiang, Taipei City 112 (TW); KUO, Richard Lee-Chee, Taipei City 112 (TW)
(74) Representative: Hoefer & Partner Patentanwälte mbB

(56) References cited:
- US-A1- 2012 320 874
- US-A1- 2014 177 607
- US-A1- 2014 376 466

## Description

### TECHNICAL FIELD

The present disclosure is directed to methods and apparatus for improving beam finding in a wireless communication system.

### BACKGROUND

The concept of radio access for 5G is mentioned in [1]. One key point is to efficiently integrate both lower and higher frequency bands. Higher frequency bands provide opportunities for wider spectrum but have coverage limitations because of higher path loss. So, [1] proposes that 5G system has a two-layer structure that consists of a coverage layer (e.g. consisting of macro cell(s)) and a capacity layer (e.g. consisting of small cell(s) or phantom cell(s)). The coverage layer use existing lower frequency bands to provide basic coverage and mobility. The capacity layer uses new higher frequency bands to provide high data rate transmission. The coverage layer could be supported by enhanced LTE RAT while the capacity layer could be supported by a new RAT dedicated to higher frequency bands. The efficient integration of the coverage and capacity layers is enabled by the tight interworking (dual connectivity) between the enhanced LTE RAT and the new RAT.

Dual connectivity [2] is a mode of operation of a UE in RRC_CONNECTED, configured with a Master Cell Group (i.e. a group of serving cells associated with the MeNB, comprising of the PCell and optionally one or more SCells) and a Secondary Cell Group (i.e. a group of serving cells associated with the SeNB, comprising of PSCell and optionally one or more SCells). A UE configured with dual connectivity means that the UE is configured to utilise radio resources provided by two distinct schedulers, located in two eNBs (MeNB and SeNB) connected via a non-ideal backhaul over the X2 interface. And further details of dual connectivity can be found in [2].

In dual connectivity, the random access procedure is also performed on at least PSCell upon SCG addition/modification (if instructed), upon DL data arrival during RRC_CONNECTED requiring random access procedure (e.g. when UL synchronisation status is non-synchronised), or upon UL data arrival during RRC_CONNECTED requiring random access procedure (e.g. when UL synchronisation status is non-synchronised or there are no PUCCH resources for SR available). The UE initiated random access procedure is performed only on PSCell for SCG.

The random access procedure has two different types: contention-based and non-contention based. The contention based random access procedure includes the following four steps:
1. Random Access Preamble on RACH mapped to PRACH in uplink
2. Random Access Response (RAR) generated by MAC on DL-SCH
3. First scheduled UL transmission on UL-SCH
4. Contention Resolution on DL

And the non-contention based random access procedure includes the following three steps:
0. Dedicated Random Access Preamble assignment via dedicated signalling in DL
1. Non-contention Random Access Preamble on RACH mapped to PRACH in uplink
2. Random Access Response on DL-SCH

Details of each step in a random access procedure can be found in [2][3].

Furthermore, the power control of random access procedure is properly defined to improve the robustness and efficiency [6]. The power of preamble would be increased from attempt to attempt, also known as power ramping, if the preamble attempts have not yet succeeded. And once a preamble attempt succeeds, the power level of that preamble attempt would be used to derive the power of the following uplink transmission, e.g. PUSCH, PUCCH or reference signals. More details on this aspect can be found in [6].

And cells on the capacity layer may use beam forming. Beam forming is a signal processing technique used in antenna arrays for directional signal transmission or reception. This is achieved by combining elements in a phased array in such a way that signals at particular angles experience constructive interference while others experience destructive interference. Beam forming can be used at both the transmitting and receiving ends in order to achieve spatial selectivity. The improvement compared with omnidirectional reception/transmission is known as the receive/transmit gain.

Beam forming is frequently applied in radar systems. The beam created by a phased array radar is comparatively narrow and highly agile compared to a moving dish. This characteristic gives the radar the ability to detect small, fast targets like ballistic missiles in addition to aircrafts.

The benefit of co-channel interference reduction also makes beam forming attractive to a mobile communication system designer. Reference [4] discloses the concept of beam division multiple access (BDMA) based on beam forming technique. In BDMA, a base station can communicate with a UE via a narrow beam to obtain the receive/transmit gain. It is also possible for the base station to communicate with a UE using multiple beams if these beams are qualified. Besides, two UEs in different beams can share the same radio resources at the same time and thus the capacity of a mobile communication system can increase greatly. To achieve that, the base station should know in which beam(s) a UE can communicate with the base station. US2014/0177607A1 and US2014/0376466A1 are disclosing methods and devices for determining beams which can be used for communication between a user equipment and a base station.

### SUMMARY OF THE DISCLOSURE

The invention is defined by the appended claims. The present disclosure is directed to methods and apparatus for improving beam finding in a wireless communication system. The invention is defined in the independent claims. The dependent claims define respective preferred embodiments thereof, respectively.

In particular, preferably the present invention is directed to determine whether a beam set of a UE is complete or a beam finding procedure is finished.

According to a first aspect of the invention, after the first success of preamble, several extra transmissions (preamble/data/RS) are required to allow eNB to make sure the beam set of a UE is complete. Rule(s) is required for eNB to decide whether the beam set is complete; in other words, the eNB decides based on rule(s) in relation to these extra transmissions of the UE whether the beam set is complete.

Therefore, according to the invention, at least one extra transmission is made or considered by the UE after the first success of preamble, and eNB can determine whether a beam set of a UE is complete or a beam finding procedure is finished, in particular based on this at least one extra transmission. The eNB can make this decision based on a predetermined ruling. According to the first aspect of the invention, i.e. when several extra transmissions are made, in particular when these are made with the same transmission power, the ruling is independent from the transmission power. Alternatively or additionally, according to the second aspect of the invention, the transmission power level for one or several extra transmissions and/or the following transmissions after the extra transmissions is changed.

According to the invention, a method of a base station comprises:
the base station detects a first preamble transmission from a UE on some beam(s);
the base station continues detecting on extra transmission(s) whether there are other beams which can be used to communicate with the UE; and
the base station considers the beam set of the UE is complete if some rule is fulfilled.

According to the invention, this method of a base station is preferably a method performed by the base station. Alternatively or additionally preferably, this method is applicable to the LTE standard or standards based thereon, e.g. LTE-A, or generally 5G. However, this method according to the invention is applicable to any comparable standard. Further alternatively or additionally preferably, this method for a base station is preferably a method performed by a base station for improving beam finding in a wireless communication system. Still further alternatively or additionally preferably, this method for a base station is preferably a method performed by a base station to determine whether a beam set of a UE is complete or a beam finding procedure is finished.

According to the first aspect of the invention, a method of a user equipment, comprises:
the UE transmits a preamble during a random access procedure;
the UE receives a RAR from a base station;
the UE performs several extra transmissions after receiving the RAR.

According to the invention, each of these methods of a user equipment is preferably a method performed by the UE. Alternatively or additionally preferably, this respective method is applicable to the LTE standard or standards based thereon, e.g. LTE-A, or generally 5G. However, this respective method according to the invention is applicable to any comparable standard. Further alternatively or additionally preferably, this respective method for a user equipment is preferably a method performed by a user equipment for improving beam finding in a wireless communication system. Still further alternatively or additionally preferably, this respective method for a user equipment is preferably a method performed by a user equipment to enable a base station to determine whether a beam set of a UE is complete or a beam finding procedure is finished.

According to the invention, in the method of a base station, preferably considering the beam set of the UE is complete means all the qualified beam(s) of the UE is/are found. This means that the eNB can determine to have a complete beam set also in case not all beams of the UE are found, i.e. the eNB does not search for further beam(s) in case the rule is fulfilled even when not all beams, e.g. a predetermined number of beams that the UE supports, are identified. Further preferably, a qualified beam is a beam with quality more than a threshold, wherein still further preferably the quality is comparing with the strongest beam in the UE's beam set. In this way, a particular effective way is provided to determine whether a beam set of a UE is complete or a beam finding procedure is finished in that the strongest beam of all identified beams of the UE determines a threshold for other received beams of the UE to be included in the UEs beam set that is then used by the eNB. In this way, e.g. all beams that have a received signal power of more than 80% of the received signal power of the strongest beam are regarded as qualified beam.

According to the invention, in the method of a base station, preferably
(1) the rule is according to the total number of extra transmission(s), and/or
(2) the rule is according to the number of extra transmission after the previous new qualified beam is detected, and/or
(3) the rule is according to a power difference between the first preamble transmission and an extra transmission, and/or
(4) the rule is according to a quality of a newly detected beam from an extra transmission, and/or
(5) the rule is the difference of strength of the newly detected beam and strength of the strongest beam achieve certain value, and/or
(6) wherein the rule is a newly detected beam is not qualified.

In this way, preferably, the invention determines six criteria for the rule to determine whether a beam set of a UE is complete or a beam finding procedure is finished. These criteria might be chosen individually or in any combination.

According to the first aspect of the invention, in the method of a user equipment, preferably the number of extra transmission is fixed, and/or the number of extra transmission is configurable. These options can be implemented alternatively, i.e. the number of extra transmissions is fixed or configurable, but also together so that the number of extra transmissions is fixed in a configurable manner, i.e. after being configured not changeable anymore.

According to the first aspect of the invention, in the method of a user equipment, alternatively or additionally preferably the extra transmission is terminated by a signaling from the base station, and/or the extra transmission is terminated by another RAR from the base station. In this way, the base station, which has determined that a beam set of a UE is complete or a beam finding procedure is finished, can indicate to the UE to stop the extra transmissions in a convenient way. This enables to not only rely on a predetermined ruling on the UE side when to stop with the extra transmissions, but to determine the number of extra transmissions in a flexible manner, e.g. depending on the environmental conditions such as the receiving conditions of the eNB.

The invention, as defined generally or in the preferred embodiments above, provides the advantage that the operation of finding beam set of a UE is more efficient.

In order to make the aforementioned features and advantages of the present disclosure comprehensible, exemplary embodiments accompanied with figures are described in detail below. It is to be understood that both the foregoing general description and the following detailed description are exemplary, and are intended to provide further explanation of the disclosure as claimed.

It should be understood, however, that this summary may not contain all of the aspect and embodiments of the present disclosure and is therefore not meant to be limiting or restrictive in any manner. Also the present disclosure would include improvements and modifications which are obvious to one skilled in the art.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 illustrates a multiple access wireless communication system according to one of the exemplary embodiments of the disclosure.
FIG. 2 is a simplified block diagram which illustrates an exemplary embodiment of a transmitter system and a receiver system.
FIG. 3 illustrates an alternative simplified functional block diagram of a communication device in accordance with one of the exemplary embodiments of the disclosure.
FIG. 4 illustrates a simplified block diagram of the program code 312 shown in FIG. 3 in accordance with one of the exemplary embodiments of the disclosure.
FIG. 5 illustrates a first strategy according to the invention to determine whether a beam set of a UE is complete or a beam finding procedure is finished.
FIG. 6 illustrates a second strategy according to the invention to determine whether a beam set of a UE is complete or a beam finding procedure is finished.
FIG. 7 illustrates a third strategy according to the invention to determine whether a beam set of a UE is complete or a beam finding procedure is finished.

### DETAILED DESCRIPTION OF DISCLOSED EMBODIMENTS

Reference will now be made in detail to the present exemplary embodiments of the disclosure, examples of which are illustrated in the accompanying drawings. Wherever possible, the same reference numbers

The invention(s) described above can be applied to or implemented in exemplary wireless communication systems and devices described below. In addition, the invention(s) is described mainly in the context of the 3GPP architecture reference model. However, it is understood that with the disclosed information, one skilled in the art could easily adapt for use and implement aspects of the invention in a 3GPP2 network architecture as well as in other network architectures.

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A (Long Term Evolution Advanced) wireless access, 3GPP2 UMB (Ultra Mobile Broadband), WiMax, or some other modulation techniques.

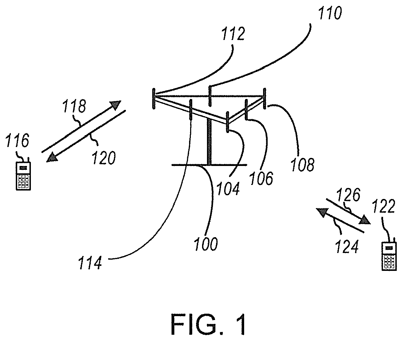

Figure 1 shows a multiple access wireless communication system according to one embodiment of the invention. An access network 100 (AN) includes multiple antenna groups, one including 104 and 106, another including 108 and 110, and an additional including 112 and 114. In Figure 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency than that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage normally causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a wireless communication device, terminal, access terminal or some other terminology.

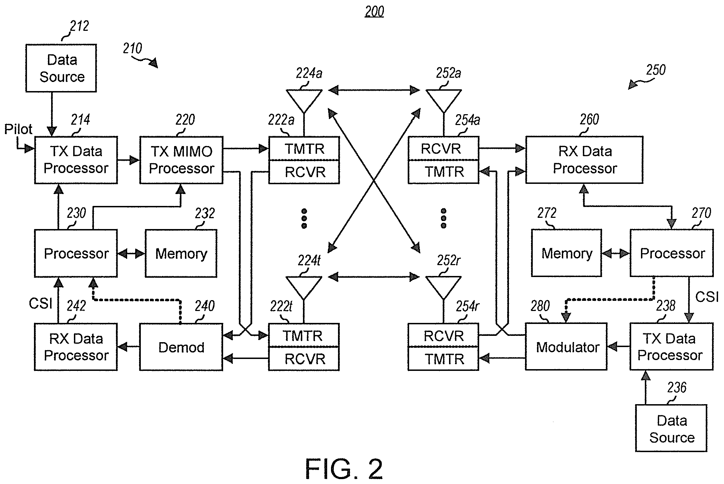

Figure 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides NT modulation symbol streams to NT transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. NT modulated signals from transmitters 222a through 222t are then transmitted from NT antennas 224a through 224t, respectively.

At receiver system 250, the transmitted modulated signals are received by NR antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the NR received symbol streams from NR receivers 254 based on a particular receiver processing technique to provide NT "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

Memory 232 may be used to temporarily store some buffered/computational data from 240 or 242 through Processor 230, store some buffed data from 212, or store some specific program codes. And Memory 272 may be used to temporarily store some buffered/computational data from 260 through Processor 270, store some buffed data from 236, or store some specific program codes.

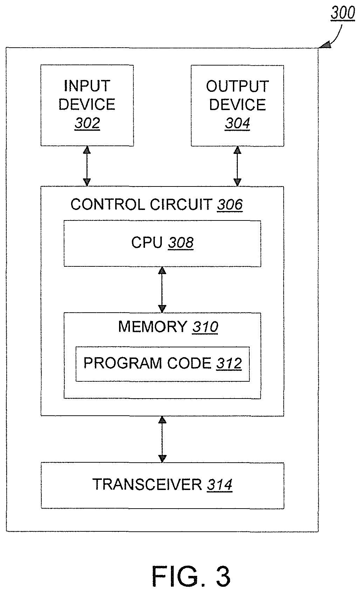

Turning to Figure 3, this figure shows an alternative simplified functional block diagram of a communication device according to one embodiment of the invention. As shown in Figure 3, the communication device 300 in a wireless communication system can be utilized for realizing the UEs (or ATs) 116 and 122 in Figure 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN (or eNB) 100 in Figure 1.

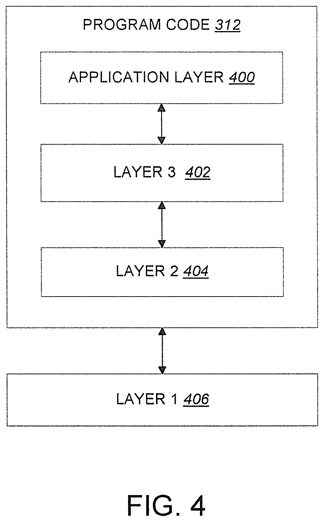

Figure 4 is a simplified block diagram of the program code 312 shown in Figure A3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE or LTE-A system, the Layer 2 portion 404 may include a Radio Link Control (RLC) layer and a Medium Access Control (MAC) layer. The Layer 3 portion 402 may include a Radio Resource Control (RRC) layer.

Any two or more than two of the following paragraphs, (sub)-bullets, points, actions, or claims described in each invention may be combined logically, reasonably, and properly to form a specific method. Any sentence, paragraph, (sub)-bullet, point, action, or claim described in each of the following invention(s) may be implemented independently and separately to form a specific method. Dependency, e.g. "based on", "more specifically", or etc., in the following invention(s) is just one possible embodiment which would not restrict the specific method.

To fully utilize the benefit of BDMA, the base station has to realize in which beam(s) a UE can communicate with the base station, in the following may be referred as the beam set of the UE. One way of finding the beam set of a UE is for an eNB to detect uplink transmission from that UE. For example, when UE performs a random access procedure, the eNB may detect preamble(s) from a UE on each beam to know the signal from the UE would arrive on which beam. Note that it is possible that not all the beam where signal can be observed from a UE would be considered in the UE's beam set. It is possible to remove weak beam(s) which is inefficient to utilize as well as would cause negligible interference to other UE on that beam(s). Therefore, criteria may be defined to judge whether a beam is qualified as a beam set of a UE. An example can be a beam whose quality is 20dB (e.g. from signaling strength perspective) lower than that of the strongest beam of the UE would not be considered as a qualified beam, so that it would not be considered in the UE's beam set. On the other hand, a beam whose quality is 15 dB lower than that of the strongest beam of the UE would be considered as a qualified beam as well as would be considered in the UE's beam set. A threshold may be defined to serve that purpose.

Also note that a base station/cell may due to hardware limitation or power saving purpose not utilizes all the available beams at the same time, i.e. the maximum number of beams which can be generated by a cell at one time could be less than the total number of beams covered by a cell. If such limitation is applied, more transmissions are required to scan all the beams of a cell to find out the beam set of a UE comparing with the case without such limitation. An example can be a cell has 9 beams in total and can generate (transmit/receive) three at the same time. In one occasion, beam 1, 4, and 7 are generated, in another occasion beam 2, 5, 8 are generated, in the other occasion beam 3, 6, 9 are generated. To scan all the beam of the cell, UE at least need to conduct transmission on the three occasions/transmission opportunities. The following discussion/solution can be applied on the case when there is such a limitation as well as on the case when there is no such limitation.

When base station detects preamble on one beam from a UE, maybe not all qualified beam could be detected within the same attempt(s), e.g. due to not enough power or channel condition on certain beam. (Note that when a cell suffers the limitation of number of generated beams, multiple preamble attempts with the same power level may need to be transmitted to allow scanning all the beams of a cell). As mentioned in the background, the preamble power would increase from attempt to attempt, while the current power level of preamble may lead to successful detection on some beam while mis-detection on some other beams. For example, maybe some stronger beams would be detected earlier while some weaker but qualified beams may not be detected. The base station needs some strategy to judge whether the beam finding is finished or not. Some UE behavior may be required to assist the judgment.

The present invention enables to determine whether a beam set of a UE is complete or a beam finding procedure is finished. According to the invention, the following strategy can be considered (independently or jointly):

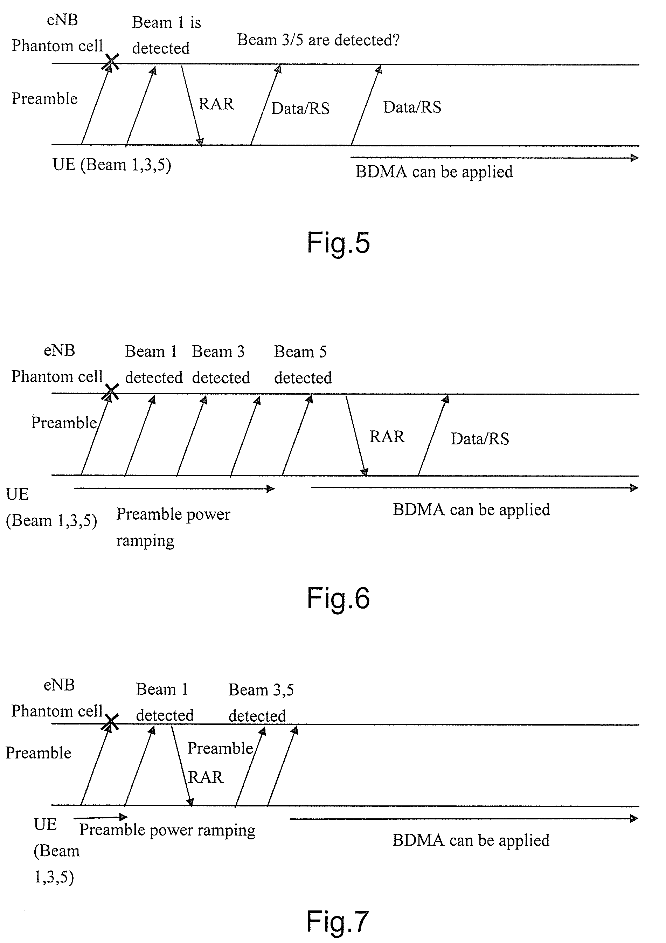

Strategy 1: Once the preamble of a UE is detected on any of the beams in the earliest attempt, eNB transmits RAR to finish the random access procedure, even if the beam set may not be complete. After the random access procedure, UE would then conduct some data or reference signal (RS) transmission, where eNB may be able to ensure whether there is any qualified beam whose preamble was not detected, during which the beam set of the UE has not yet been determined and BDMA may not be applied. The data /RS transmission may be triggered by the RAR or by other signaling. The number of data/RS transmission may be fixed or configurable. Alternatively a signaling can be used to terminate the data/RS transmission to complete the beam set and in the following nominal data/RS transmission is performed. After that examination, when eNB considers the beam set is complete, BDMA is applied afterward. An example of strategy 1 can be found in Figure 5.

Strategy 2: when the preamble of a UE is detected on any of the beams, eNB does not transmit corresponding RAR. Instead, eNB continues to detect preamble to find out whether there is undetected qualified beam. When eNB consider the beam set is complete, eNB can send a RAR to finish the random access procedure. In the following BDMA can be applied. An example of strategy 2 can be found in Figure 6.

Strategy 3: Once the preamble of a UE is detected on any of the beams in the earliest attempt, eNB transmits RAR to the UE, even if the beam set may not be complete. UE then transmit several additional preamble transmissions, where eNB may be able to ensure whether there is any qualified beam whose preamble was not detected, during which the beam set of the UE has not yet been determined and BDMA may not be applied. The preamble transmission may be terminated by another RAR or the number of additional preamble is fixed or configurable. After that examination, when eNB considers the beam set is complete, BDMA is applied afterward. An example of strategy 3 can be found in Figure 7.

It is to be noted that the arrow of preamble transmission in Figures 5 to 7 refers to an opportunity for eNB to detect the preamble transmission on all beams of a cell. For a cell suffering beam number limitation, the arrow of preamble transmission may stand for multiple attempts.

According to a first aspect of the invention, in any of the three strategies, after the first success of preamble, several extra transmissions (preamble/data/RS) are required to allow eNB to make sure the beam set of a UE is complete. Rule(s) is required for eNB to decide whether to consider the beam set is complete.

In one embodiment, the rule is the total number of extra transmission. For example, after five extra transmissions eNB would consider the beam set is complete, i.e. the qualified beam detected during the preamble and extra transmission(s) is considered as beam set of the UE.

In another embodiment, the rule is the number of transmission after the previous new qualified beam is detected. For example when a new qualified beam(s) is detected (in a first success of preamble or an extra transmission), and there is no new qualified beam detected after three additional extra transmission, eNB would consider the beam set is complete, i.e. the qualified beam detected during the preamble and extra transmission(s) is considered as beam set of the UE.

In another embodiment, the rule is the power difference between the transmission power of the first success preamble and an extra transmission exceed a threshold. For example, when the power difference between the transmission power of the first success preamble and an extra transmission exceed 20 dB, eNB would consider the beam set is complete, i.e. the qualified beam detected during the preamble and extra transmission(s) is considered as beam set of the UE.

In another embodiment, the rule is when a newly detected beam is not a qualified beam. eNB would consider the beam set is complete, i.e. the qualified beam detected during the preamble and extra transmission(s) is considered as beam set of the UE.

In another embodiment, the rule is when the quality of a newly detected beam is worse than certain level. For example, when the strength of a newly detected beam is 20 dB lower than the strongest beam, eNB would consider the beam set is complete, i.e. the qualified beam detected during the preamble and extra transmission(s) is considered as beam set of the UE.

When the cell has beam number limitation, the above extra transmission may need to be conducted in multiple occasions to scan all the beam of a cell. The rule of any of the above embodiment has to be fulfilled in at least one occasion. More specifically, rule of any of the above embodiment has to be fulfilled in all different occasions.

A second aspect of the invention, which can be independent from the first aspect of the invention or which can be combined with the first aspect of the invention, is related to power control during beam finding.

For strategy 1 and 3, several extra transmission(s) would continue after receiving RAR. Whether the base station could detect all the qualified beams may depend on the power level of the extra transmission(s). According to current power control mechanism [6] (e.g. power ramping for preamble or transmission power control (TPC) command for other signals), some latency would be introduced for the extra transmission to achieve certain power (e.g. 20 dB higher) which is not efficient.

For strategy 1, 2 and 3, after the several extra transmission(s), nominal data transmission can be performed, while the power level may be higher than what is required. For example, in strategy 2, the power derived from the first received preamble may be sufficient for nominal data transmission while several power ramping is performed for completing the beam set and several TPC command to reduce the transmission power is required to resume the nominal transmission power.

For strategy 1 and 3, the concept of the second aspect of the invention is that after receiving RAR, an additional power offset or larger power step would be taken into account for the extra transmissions and when the extra transmissions finishes, the power resumes to the nominal level, i.e. the additional power offset/step is not taken into account. For strategy 2, the concept of the invention is to reduce the power immediately when receiving the RAR, e.g. base station lets UE knows how many additional preambles after the first success one is transmitted and UE derives power from the first success one.

In one embodiment, a UE receives a RAR and transmits extra transmission with an additional power offset. More specifically, when the extra transmission finishes, the additional power offset is reduced from the transmission power.

In another embodiment, a UE receives a RAR which includes the number of additional preamble after the first success one and UE derives the transmission power from the first successful one.

In another embodiment, there are different TPC command ranges in RAR for different random access procedure. The different ranges can be configured by the base station. A larger TPC command ranges can be applied for a phantom cell. A larger TPC command ranges can be applied for random access procedure for beam finding.

Referring back to FIGS. 3 and 4, the device 300, which implements a eNB, includes a program code 312 stored in memory 310 thereof. In one embodiment, the CPU 308 could execute program code 312 to enable the eNB to perform the steps of (1) detecting a first preamble transmission from a UE on some beam(s); (2) continuing detecting on extra transmission(s) whether there are other beams which can be used to communicate with the UE; and (3) considering the beam set of the UE is complete if some rule is fulfilled.

Further, referring back to FIGS. 3 and 4, the device 300, which implements a UE, includes a program code 312 stored in memory 310 thereof. In one embodiment, the CPU 308 could execute program code 312 to enable the UE to perform the steps of (1) transmitting a first preamble transmission during a random access procedure, (2) receiving a RAR in response to the first preamble transmission, and (3) perform any method steps as indicated above, in particular also in paragraphs [0019] to [0024], to enable the eNB to consider the beam set of the UE is complete if some rule is fulfilled.

In addition, in case the device is a UE as well as in case the device is a eNB, the CPU 308 could execute the program code 312 to perform all of the above-described actions and steps or others described herein, in particular those described in paragraphs [0025] to [0034] as well as [0068] to [0089] above and/or bullets 1 to 41 in relation to the first aspect of the invention and bullets 1 to 46 in relation to the second aspect of the invention below.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

### Table of abbreviations:

| Abbreviation | Full name |
|---|---|
| CA | Carrier Aggregation |
| 3GPP | 3^{rd} Generation Partnership Project |
| BDMA | Beam Division Multiple Access |
| DL | Downlink |
| DL-SCH | Downlink Shared Channel |
| eNB | evolved Node B |
| E-UTRA | Evolved Universal Terrestrial Radio Access |
| LTE | Long Term Evolution |
| MAC | Medium Access Control |
| MeNB | Master eNB |
| PCell | Primary Cell |
| PDCCH | Physical Downlink Control Channel |
| PRACH | Physical Random Access Channel |
| PSCell | Primary SCell |
| PUCCH | Physical Uplink Control Channel |
| PUSCH | Physical Uplink Share Channel |
| RACH | Random Access Channel |
| RAR | Random Access Response |
| RAT | Radio Access Technology |
| RRC | Radio Resource Control |
| RS | Reference Signal |
| RSRP | Reference Signal Received Power |
| RSRQ | Reference Signal Received Quality |
| SCell | Secondary Cell |
| SCG | Secondary Cell Group |
| SeNB | Secondary eNB |
| SR | Scheduling Request |
| SRS | Sounding Reference Signal |
| TPC | Transmission Power Control |
| TS | Technical Specification |
| UE | User Equipment |
| UL | Uplink |
| UL-SCH | Uplink Shared Channel |

### References:

[1] DOCOMO 5G White Paper, NTT docomo. https://www.nttdocomo.co.jp/english/binary/pdf/corporate/technology/whitepaper_5 g/DOCOMO_5G_White_Paper.pdf
[2] 3GPP R2-145410, "Introduction of Dual Connectivity".
[3] 3GPP TS 36.321 V12.3.0, "E-UTRA MAC protocol specification".
[4] US Patent Application 20100165914, "BEAM DIVISION MULTIPLE ACCESS SYSTEM AND METHOD FOR MOBILE COMMUNICATION SYSTEM".
[5] US Patent 7,184,492B2, "USING ANTENNAARRAYS IN MULTIPATH ENVIRONMENT".
[6] 3GPPTS 36.213 V12.3.0, "Physical layer procedures"

## Claims

1. A method of a base station (100), comprising:
the base station detects a first preamble transmission from a user equipment (116, 122), in the following also referred to as UE, on at least one beam(s); and
the base station transmits a response to the UE in response to reception of the first preamble;
**characterized in that**:
after transmitting the response, the base station continues detecting extra transmission(s) from the UE to determine whether there are other beams which can be used to communicate with the UE; and
the base station considers a beam set of the UE is complete if a total number of extra transmissions from the UE reaches a pre-configured value, wherein the beam set of the UE includes beams on which the base station can communicate with the UE.

2. Method according to claim 1, wherein considering the beam set of the UE is complete means all beams which can be used for communicating with the UE is found.

3. Method according to claim 1, wherein a beam is included in the beam set of the UE if a signal strength received from the beam is greater than a threshold.

4. A method of a user equipment (116, 122), in the following also referred to as UE, comprising:
the UE transmits a preamble to a base station (100) during a random access procedure for the base station to determine at least one beam for communicating with the UE;
the UE receives a random access response, in the following also referred to as RAR, from a base station;
**characterized in that**:
the UE performs several extra preamble transmissions on additional beams after receiving the RAR for the base station to determine a complete beam set for communicating with the UE.

5. Method according to claim 4, wherein a total number of extra transmissions is fixed or configurable.

6. Method according to claim 4, wherein the UE stops the extra transmissions when a specific signalling is received from the base station.

7. A communication apparatus (300), wherein the communication apparatus (300) is a base station, comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (308) to perform the method steps as defined in any one of the preceding claims 1 to 3.

8. A communication apparatus (300), wherein the communication apparatus (300) is a user equipment, comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (308) to perform the method steps as defined in any one of the preceding claims 4 to 6.

## Patentansprüche

1. Verfahren einer Basisstation (100), aufweisend:
die Basisstation erfasst eine erste Präambel-Übertragung von einer Teilnehmerausrüstung (116, 122), im Folgenden auch als UE bezeichnet, auf mindestens einem Träger; und
die Basisstation sendet eine Antwort an die UE als Reaktion auf den Empfang der ersten Präambel;
**dadurch gekennzeichnet, dass**:
nach dem Senden der Antwort die Basisstation fortfährt, zusätzliche Übertragung(en) von der UE zu erfassen, um festzustellen, ob es andere Träger gibt, welche verwendet werden können, um mit der UE zu kommunizieren; und
die Basisstation einen Träger-Satz der UE als vollständig erachtet, wenn eine Gesamtzahl von zusätzlichen Übertragungen von der UE einen voreingestellten Wert erreicht, wobei der Träger-Satz der UE Träger umfasst, auf welchen die Basisstation mit der UE kommunizieren kann.

2. Verfahren gemäß Anspruch 1, wobei das Erachten des Träger-Satzes der UE als vollständig bedeutet, dass alle Träger, welche für ein Kommunizieren mit der UE verwendet werden können, gefunden sind.

3. Verfahren gemäß Anspruch 1, wobei ein Träger in dem Träger-Satz der UE eingeschlossen ist, wenn eine Signalstärke, die von dem Träger empfangen wird, größer ist als ein Schwellenwert.

4. Verfahren einer Teilnehmerausrüstung (116, 122), im Folgenden auch als UE bezeichnet, aufweisend:
die UE sendet eine Präambel an eine Basisstation (100) während einer Zufallszugriffsprozedur, damit die Basisstation mindestens einen Träger für ein Kommunizieren mit der UE feststellen kann;
die UE empfängt eine Zufallszugriffsantwort, im Folgenden auch als RAR bezeichnet, von der Basisstation;
**dadurch gekennzeichnet, dass**:
die UE mehrere zusätzliche Präambel-Übertragungen auf zusätzlichen Trägern nach dem Empfangen der RAR ausführt, damit die Basisstation einen vollständigen Träger-Satz für ein Kommunizieren mit der UE feststellen kann.

5. Verfahren gemäß Anspruch 4, wobei eine Gesamtzahl von zusätzlichen Übertragungen fest oder einstellbar ist.

6. Verfahren gemäß Anspruch 4, wobei die UE die zusätzlichen Übertragungen beendet, wenn ein bestimmtes Signal von der Basisstation empfangen wird.

7. Kommunikationsvorrichtung (300), wobei die Kommunikationsvorrichtung (300) eine Basisstation ist, aufweisend:
eine Steuerschaltung (306);
einen Prozessor (308), der in der Steuerschaltung (306) installiert ist;
einen Speicher (310), der in der Steuerschaltung (306) installiert und funktionsfähig mit dem Prozessor (308) verbunden ist;
wobei der Prozessor (308) eingerichtet ist, einen Programm-Code (312), der in dem Speicher (308) gespeichert ist, auszuführen, um die in einem der vorstehenden Ansprüche 1 bis 3 definierten Verfahrensschritte auszuführen.

8. Kommunikationsvorrichtung (300), wobei die Kommunikationsvorrichtung (300) eine Teilnehmerausrüstung ist, aufweisend:
eine Steuerschaltung (306);
einen Prozessor (308), der in der Steuerschaltung (306) installiert ist;
einen Speicher (310), der in der Steuerschaltung (306) installiert und funktionsfähig mit dem Prozessor (308) verbunden ist;
wobei der Prozessor (308) eingerichtet ist, einen Programm-Code (312), der in dem Speicher (308) gespeichert ist, auszuführen, um die in einem der vorstehenden Ansprüche 4 bis 6 definierten Verfahrensschritte auszuführen.

## Revendications

1. Procédé d'une station de base (100), comprenant le fait:
de détecter, par le biais de la station de base, une première transmission de préambule à partir d'un équipement utilisateur (116, 122), également dénommé ci-après UE, sur au moins un faisceau; et
de transmettre, par le biais de la station de base, une réponse à l'UE en réponse à la réception du premier préambule;
**caractérisé en ce que**:
après transmission de la réponse, la station de base continue à détecter une ou des transmission(s) supplémentaire(s) à partir de l'UE pour déterminer s'il y a d'autres faisceaux qui peuvent être utilisés pour communiquer avec l'UE; et
la station de base considère qu'un ensemble de faisceaux de l'UE est complet si un nombre total de transmissions supplémentaires à partir de l'UE atteint une valeur préconfigurée, où l'ensemble de faisceaux de l'UE comporte des faisceaux sur lesquels la station de base peut communiquer avec l'UE.

2. Procédé selon la revendication 1, dans lequel le fait de considérer que l'ensemble de faisceaux de l'UE est complet signifie que tous les faisceaux qui peuvent être utilisés pour communiquer avec l'UE sont trouvés.

3. Procédé selon la revendication 1, dans lequel un faisceau est inclus dans l'ensemble de faisceaux de l'UE si une intensité de signal reçue à partir du faisceau est supérieure à un seuil.

4. Procédé d'un équipement utilisateur (116, 122), également dénommé ci-après UE, comprenant le fait:
de transmettre, par le biais de l'UE, un préambule à une station de base (100) pendant une procédure d'accès aléatoire pour la station de base afin de déterminer au moins un faisceau pour communiquer avec l'UE;
de recevoir, par le biais de l'UE, une réponse d'accès aléatoire, également dénommée ci-après RAR, à partir d'une station de base;
**caractérisé en ce que**:
l'UE effectue plusieurs transmissions de préambule supplémentaires sur des faisceaux additionnels après réception de la RAR pour la station de base afin de déterminer un ensemble de faisceaux complet pour communiquer avec l'UE.

5. Procédé selon la revendication 4, dans lequel un nombre total de transmissions supplémentaires est fixe ou configurable.

6. Procédé selon la revendication 4, dans lequel l'UE arrête les transmissions supplémentaires lorsqu'une signalisation spécifique est reçue à partir de la station de base.

7. Appareil de communication (300), dans lequel l'appareil de communication (300) est une station de base, comprenant:
un circuit de commande (306);
un processeur (308) installé dans le circuit de commande (306);
une mémoire (310) installée dans le circuit de commande (306) et couplée de manière fonctionnelle au processeur (308);
dans lequel le processeur (308) est configuré pour exécuter un code de programme (312) stocké dans la mémoire (308) pour effectuer les étapes de procédé telles que définies dans l'une quelconque des revendications précédentes 1 à 3.

8. Appareil de communication (300), dans lequel l'appareil de communication (300) est un équipement utilisateur, comprenant:
un circuit de commande (306);
un processeur (308) installé dans le circuit de commande (306);
une mémoire (310) installée dans le circuit de commande (306) et couplée de manière fonctionnelle au processeur (308);
dans lequel le processeur (308) est configuré pour exécuter un code de programme (312) stocké dans la mémoire (308) pour effectuer les étapes de procédé telles que définies dans l'une quelconque des revendications précédentes 4 à 6.
